# EUROPÄISCHE PATENTSCHRIFT

(11) **EP 1 908 724 B1**
(45) Veröffentlichungstag und Bekanntmachung des Hinweises auf die Patenterteilung: **11.05.2011**
(21) Anmeldenummer: 07019297.6
(22) Anmeldetag: 01.10.2007
(51) Int. Cl.: B66F 9/075, B66F 17/00, B60G 9/02

(54) **Flurförderzeug mit verstellbarer Radachse**
Industrial truck with adjustable wheel axle
Chariots de manutention dotés d'un essieu ajustable

(30) Priorität: 02.10.2006 DE 102006046858
(43) Veröffentlichungstag der Anmeldung: 09.04.2008
(73) Patentinhaber: Jungheinrich Aktiengesellschaft, 22047 Hamburg (DE)
(72) Erfinder: Bögelein, Rolf, 74564 Crailsheim (DE); Plastinin, Oleg, 84028 Landshut (DE); Schröder, Henrik, 21423 Winsen-Roydorf (DE); Werner, Ralf, 84036 Landshut (DE); Zeidler, Christoph, 84032 Landshut (DE)
(74) Vertreter: Trossin, Hans-Jürgen

(56) Entgegenhaltungen:
- EP-A- 0 465 838
- EP-A- 0 891 883
- DE-A1- 19 732 400
- DE-B- 1 051 196
- GB-A- 1 223 280

## Beschreibung

Die vorliegende Anmeldung betrifft ein Flurförderzeug, insbesondere einen Gabelstapler gemäß dem Oberbegriff von Anspruch 1. Ein derartiges Fluidförderzeug umfasst unter anderem einen Fahrzeugrahmen und ein relativ zum Fahrzeugrahmen verlagerbares Lastaufnahmemittel, wobei an dem Fahrzeugrahmen wenigstens ein lastaufnahmemittelnäheres Rad und mit Abstand von diesem wenigstens ein lastaufnahmemittelferneres Rad vorgesehen ist, wobei die Radachse wenigstens eines Rades relativ zum Fahrzeugrahmen längs einer Bewegungstrajektorie mit einer zur Aufstandsfläche des Flurförderzeugs orthogonalen Bewegungskomponente beweglich ist, wobei ferner auf die wenigstens eine bewegliche Radachse eine von dem Eigengewicht des Flurförderzeugs und einer gegebenenfalls von diesem aufgenommenen Last verursachte Belastungskraft einwirkt, welche sich betriebsmäßig ändert. Die wenigstens eine bewegliche Radachse ist zusätzlich mit einer veränderbaren Zusatzkraft beaufschlagt oder beaufschlagbar.

Wie bei den meisten Flurförderzeugen üblich, ist zur Verlagerung des Lastaufnahmemittels relativ zum Fahrzeugrahmen wenigstens ein wahlweise steuerbares Lastkraftgerät in Kraftübertragungsverbindung mit dem Lastaufnahmemittel vorgesehen.

Zur einfachen und gezielten Niveaueinstellung des Fahrzeugrahmens bezüglich der Aufstandsflächen weist das bekannte Flurförderzeug eine mit der wenigstens einen beweglichen Radachse verbundene fluidbetriebene Verstelleinrichtung auf, durch welche die bewegliche Radachse relativ zum Fahrzeugrahmen längs einer Verstelltrajektorie mit einer zur Aufstandsfläche des Flurförderzeugs orthogonalen Verstellkomponente verstellbar ist. Dabei kann ein gewünschtes Niveau des Fahrzeugrahmens in einfacher Weise eingestellt werden, da die veränderbare Zusatzkraft die zur Verstellung der beweglichen und verstellbaren Radachse benötigte Stellkraft ist.

Ein gattungsgemäßes Flurförderzeug ist in Form eines Gabelstaplers in der DE 197 32 400 A1 offenbart. Der dort gezeigte Gabelstapler hat eine starr am Fahrzeugrahmen vorgesehene Vorderachse (lastaufnahmemittelnähere Radachse) und eine relativ zum Fahrzeugrahmen bewegliche Hinterachse (lastaufnahmemittelfernere Radachse). Die Hinterachse ist über eine Kolben-Zylinder-Anordnung verstellbar mit dem Fahrzeugrahmen verbunden. Ein Neigungswinkelsensor erfasst eine Neigung des Fahrzeugrahmens, etwa auf Grund einer Lastaufnahme, Lastabgabe oder Lastverlagerung durch eine als das Lastaufnahmemittel vorgesehene Gabel. Der Neigungswinkelsensor sendet in Abhängigkeit von der erfassten Neigung des Fahrzeugrahmens Signale an eine Steuerung eines Elektromotors, welcher eine Hydraulikpumpe antreibt und so den Hydraulikdruck für die die Hinterachse verlagernde Kolben-Zylinder-Anordnung erzeugt.

Bei Flurförderzeugen der eingangs genannten Art ist es wichtig, dafür zu sorgen, dass unabhängig vom Belastungszustand des Flurförderzeugs sich der Fahrzeugrahmen auf einem gewünschten Niveau bezüglich der Aufstandsfläche befindet.

Mit "Aufstandsfläche" ist eine Fläche bezeichnet, auf der das Flurförderzeug mit seinen Rädern auf dem Boden aufsteht.

So kann es etwa dann, wenn die lastaufnahmemittelfernere Radachse die bewegliche Radachse ist, beispielsweise passieren, dass bei der Aufnahme einer Last auf dem Lastaufnahmemittel als eine Möglichkeit einer betriebsmäßigen Änderung der Belastungskraft die lastaufnahmemittelfernere Radachse so stark entlastet wird, dass es zu einer unerwünschten Relativbewegung zwischen Fahrzeugrahmen und der lastaufnahmemittelferneren Radachse kommt.

Weiterhin kann beim Befahren von schiefen Ebenen ohne Verlagerung der beweglichen Radachse relativ zum Fahrzeugrahmen der Fahrzeugrahmen so stark gegenüber der Horizontalen geneigt sein, dass unter Umständen unerwünschterweise Lastverlagerungsvorgänge ausgeführt werden müssen, um eine sichere Lastbeförderung gewährleisten zu können.

Ein weiteres gattungsgemäβes Flurförderzeug ist aus der DE 10 51 196 B bekannt, bei welchem eine fluidbetriebene Kolben-Zylinder-Anordunng zur Verstellung der Hinterradachse relativ zum Fahrzeugrahmen eingesetzt wird.

Bei diesem Flurförderzeug wird die Verstellung der Hinterradachse vom Fahrer eingestellt und gesteuert.

Es ist Aufgabe der vorliegenden Erfindung, ein Flurförderzeug vorzuschlagen, welches in wirtschaftlicher und zuverlässiger Weise ermöglicht, dass sich der Fahrzeugrahmen bezüglich der Aufstandsfläche des Flurförderzeugs auf einem gewünschten Lageniveau befindet.

Diese Aufgabe wird erfindungsgemäß dadurch gelöst, dass zur Unterdrückung einer unerwünschten Relativbewegung zwischen der wenigstens einen beweglichen Achse und dem Fahrzeugrahmen die Zusatzkraft nach Maßgabe der von dem Lastkraftgerät ausgegebenen Kraft veränderbar ist.

Die von dem Lastkraftgerät ausgegebene Kraft wird erfindungsgemäß als Orientierungsgröße für die Änderung der Zusatzkraft verwendet:

Die Größe der aufgenommenen Last und der Ort, an dem sie sich relativ zum Fahrzeugrahmen befindet, sind neben dem Fahrzeugeigengewicht maßgeblich für die auf wenigstens eine bewegliche Radachse einwirkende Belastungskraft.

Die von einem derartigen Lastkraftgerät ausgegebene Kraft steht in unmittelbarer Beziehung zu der auf dem Lastaufnahmemittel aufgenommenen Last. Daher ist die von dem Lastkraftgerät ausgegebene Kraft mittelbar ein Maß für die auf die wenigstens eine bewegliche Radachse einwirkende Belastungskraft. Somit kann durch Veränderung der Zusatzkraft nach Maßgabe der von einem Lastkraftgerät ausgegebenen Kraft die Zusatzkraft mit für Flurförderzeuge ausreichender Genauigkeit mittelbar nach Maßgabe der Belastungskraft verändert werden, ohne dass die Belastungskraft durch eine aufwändige Sensorik wie bei dem Flurförderzeug der DE 197 52 400 ermittelt werden müsste.

Wenn ausgesagt ist, dass zur Niveauregulierung des Fahrzeugrahmens ist die bewegliche Radachse mit einer Zusatzkraft beaufschlagt oder beaufschlagbar ist, so bedeutet dies, dass die Zusatzkraft entweder immer wirkt oder gewünschtenfalls auf die Radachse ausübbar ist. In beiden Fällen ist die Zusatzkraft jedoch in ihrer Wirkungsrichtung oder/und, und dies ist bevorzugt, in ihrem Betrag veränderbar.

Wenn oben ausgesagt ist, dass die auf die bewegliche Radachse einwirkende Belastungskraft von dem Eigengewicht des Flurförderzeugs und einer gegebenenfalls aufgenommenen Last verursacht ist, so soll dies nicht ausschließen, dass daneben noch weitere Kräfte auf die Radachsen einwirken können. Derartige weitere Kräfte sollen jedoch, abgesehen von der Zusatzkraft, außer Betracht bleiben.

Mit "Bewegungstrajektorie" ist die geometrische Bahn bezeichnet, längs welcher die wenigstens eine bewegliche Radachse relativ zum Fahrzeugrahmen beweglich ist. Diese Trajektorie ist durch den geometrischen Ort aller möglichen Achsstellungen gebildet. Dann, wenn die wenigstens eine bewegliche Radachse beispielsweise durch eine Schwinge am Fahrzeugrahmen angelenkt ist, ist die Bewegungstrajektorie bei Betrachtung in Achsrichtung eine gekrümmte Linie. Wenn die wenigstens eine verstellbare Radachse dagegen wie in der EP 465 838 A1 beschrieben am Fahrzeugrahmen translatorisch verstellbar vorgesehen ist, ist die Verstelltrajektorie bei Betrachtung in Richtung der Radachse eine gerade Linie.

Zur Erhöhung des Fahrkomforts des Flurförderzeugs kann die verstellbare Achse des Flurförderzeugs eine gefederte Radachse sein. Als solche ist sie mit einer Federanordnung mit dem Fahrzeugrahmen verbunden. Dann ist es aus Gründen einer geringen Bauteileanzahl vorteilhaft, wenn die Verstelleinrichtung die Federanordnung umfasst. Die Federbarkeit kann abschaltbar sein, so dass das Flurförderzeug in bestimmten Betriebssituationen ungefedert betrieben werden kann.

Die Beweglichkeit der wenigstens einen beweglichen Radachse kann wahlweise sperrbar ausgeführt sein, so dass sie in bestimmten Betriebssituationen, etwa beim Ein- oder/ und Ausstapeln oder/und bei langsamer Geschwindigkeit in ihrer Lage relativ zum Fahrzeugrahmen festgelegt werden kann.

Die Verstelleinrichtung ist fluidbetrieben, da an zahlreichen Flurförderzeugen ein Pneumatik- oder/und ein Hydraulikkreis ohnehin vorhanden ist. Außerdem ist mit einer fluidbetriebenen Verstelleinrichtung die oben genannte Federanordnung besonders leicht realisierbar. Die Federbarkeit kann dann einfach durch Ventile, etwa Sperrventile abschaltbar sein.

Ein Fluid ist dabei eine beliebige geeignete fließfähige Materie, insbesondere ein Gas oder eine Flüssigkeit, etwa ein Hydrauliköl.

Konstruktiv umfasst die Verstelleinrichtung eine Kolben-Zylinder-Anordnung, wobei ein Bauteil aus Kolben und Zylinder mit dem Fahrzeugrahmen und das jeweils andere Bauteil mit der verstellbaren Radachse verbunden ist, mit einer ersten Druckkammer, welche durch den Zylinder und eine erste Kolbenfläche des Kolbens gebildet ist und mit einem ersten Druckspeicher in Fluidübertragungsverbindung steht oder bringbar ist.

Bei dieser Lösung wird die auf die verstellbare Radachse einwirkende Belastungskraft auch auf die Kolben-Zylinder-Anordnung einwirken, so dass abhängig von dem Druck im ersten Druckspeicher sich eine Relativstellung von Kolben und Zylinder einstellt, bei welcher ein Kräftegleichgewicht an der Kolben-Zylinder-Anordnung herrscht.

Ändert sich ausgehend von einem einmal erreichten Gleichgewichtszustand die Belastungskraft, weil entweder eine Last vom Flurförderzeug aufgenommen wird oder eine aufgenommene Last angehoben oder/und geneigt wird oder eine aufgenommene Last abgestellt wird, wird sich, sofern keine weiteren Maßnahmen ergriffen werden, der Kolben relativ zum Zylinder so weit verstellen, bis erneut ein Gleichgewichtszustand an der Kolben-Zylinder-Anordnung erreicht ist ("Ausfedern" bzw. "Einfedern" der beweglichen Radachse). Dann jedoch würde sich unerwünschterweise das Niveau des Fahrzeugrahmens relativ zur Fahrzeug-Aufstandsfläche ändern.

Dem kann gemäß einer Ausführungsform der vorliegenden Erfindung dadurch entgegengewirkt werden, dass der Druck in dem ersten Druckspeicher nach Maßgabe der von dem Lastkraftgerät ausgegebenen Kraft veränderbar ist. Der auf die Kolbenfläche der ersten Druckkammer wirkende Druck erzeugt dann die Zusatzkraft.

Wenn beispielsweise die Kolben-Zylinder-Anordnung einer beweglichen lastaufnahmemittelferneren Radachse, etwa durch Aufnehmen einer Last entlastet wird, kann nach Maßgabe eines mit dem Lastaufnahmemittel in Kraftübertragungsverbindung stehenden Lastkraftgeräts der Druck im ersten Druckspeicher derart verringert werden, dass eine Relativbewegung von Kolben und Zylinder verhindert oder zumindest verringert wird, so dass es nicht oder nur in geringem Maße zu der unerwünschten Relativbewegung zwischen Radachse und Fahrzeugrahmen kommt. Dadurch kann das Niveau des Fahrzeugrahmens relativ zur Aufstandsfläche des Flurförderzeugs im Wesentlichen konstant gehalten werden.

Gemäß einer weiteren möglichen und auf Grund des einfachen Betriebs bevorzugten Ausführungsform der vorliegenden Erfindung kann die Kolben-Zylinder-Anordnung eine doppeltwirkende Kolben-Zylinder-Anordnung sein, bei welcher eine zweite Druckkammer, welche durch den Zylinder und eine der ersten Kolbenfläche entgegengesetzte zweite Kolbenfläche des Kolbens gebildet ist, mit einem vom ersten Druckspeicher gesondert ausgebildeten zweiten Druckspeicher in Fluidübertragungsverbindung steht oder bringbar ist. In diesem Falle kann zusätzlich oder alternativ zu der oben beschriebenen Veränderbarkeit des Drucks in der ersten Druckkammer der angeschlossene Fluidkreis derart ausgebildet sein, dass der Druck in der zweiten Druckkammer nach Maßgabe der vom Lastkraftgerät ausgegebenen Kraft veränderbar ist. Die Zusatzkraft wird dann durch den auf die jeweiligen Kolbenflächen ausgeübten Druck erzeugt.

Um bei dem oben gegebenen Beispiel einer Entlastung der Radachse zu bleiben, kann in diesem Falle nach Maßgabe der vom Lastkraftgerät ausgegebenen Kraft der Druck in der zweiten Druckkammer erhöht werden, so dass wiederum eine unerwünschte Verstellung der Radachse relativ zum Flurförderzeug im Wesentlichen vermieden werden kann.

Durch Erhöhen oder Verringern des Drucks in den jeweiligen Druckkammern der Kolben-Zylinder-Anordnung mittels des Verstellkraftgeräts kann zusätzlich oder alternativ eine gewünschte Neigung des Flurförderzeugs relativ zur Aufstandsfläche des Flurförderzeugs eingestellt werden.

Eine unerwünschte Relativbewegung zwischen der wenigstens einen beweglichen Radachse und dem Fahrzeugrahmen des Flurförderzeugs kann zumindest dann, wenn sich die Belastungskraft betragsmäßig in einem vorbestimmten Kraftbereich befindet, dadurch unterdrückt werden, dass das Flurförderzeug eine Steuervorrichtung aufweist, welche dazu ausgebildet ist, die Zusatzkraft derart zu verändern, dass sie betragsmäßig größer wird, wenn die Belastungskraft betragsmäßig kleiner wird und umgekehrt. Durch die derart ausgebildete Steuervorrichtung kann sichergestellt werden, dass eine auf die Radachse einwirkende Summe aus Belastungskraft und Zusatzkraft im Wesentlichen konstant ist, so dass unabhängig von der tatsächlichen Lastaufnahmesituation des Flurförderzeugs die bewegliche Radachse im Wesentlichen konstant belastet ist.

Wenn oben ausgesagt ist, dass die Lage der verstellbaren Radachse zum Fahrzeugrahmen "im Wesentlichen" konstant ist, so ist damit keine strenge Konstanz gemeint. Tatsächlich werden im Betrieb eines erfindungsgemäßen Flurförderzeugs schon aufgrund der dynamisch sich ändernden Kräfteverhältnisse weiterhin geringfügige Verstellbewegungen der beweglichen und verstellbaren Radachse relativ zum Fahrzeugrahmen ausgeführt werden, jedoch ist der Bewegungsweg durch die erfindungsgemäße Ausgestaltung des Flurförderzeugs erheblich verringert.

Vorteilhaft ist, wenn das steuerbare Lastkraftgerät ein fluidbetätigtes Lastkraftgerät ist. Dann ist der Arbeitsfluiddruck des Lastkraftgeräts eine zu der von dem Lastkraftgerät ausgegebenen Kraft proportionale Steuergröße, nach deren Maßgabe die Zusatzkraft veränderbar ist.

Besonders vorteilhaft ist das steuerbare Lastkraftgerät dann als fluidbetätigtes Lastkraftgerät ausgebildet, wenn auch die Verstelleinrichtung fluidbetrieben ist. Dabei ist besonders bevorzugt, dass Verstelleinrichtung und Lastkraftgerät durch dasselbe Fluid betätigbar sind, so dass beide Kraftgeräte durch ein gemeinsames Fluidreservoir versorgt werden können.

Ebenfalls bevorzugt umfasst das Verstellkraftgerät eine Fluidförderpumpe, mit welcher Fluid in eine Druckkammer der Verstelleinrichtung gefördert werden kann. Dabei kann wiederum die Anzahl an benötigten Komponenten gering gehalten werden, wenn die Verstelleinrichtung und das steuerbare Lastkraftgerät an eine gemeinsame Fluidförderpumpe zur Arbeitsfluidübertragung angeschlossen sind.

Dann kann außerdem konstruktiv besonders einfach realisiert werden, dass der Fluiddruck in der ersten Druckkammer oder/und der Fluiddruck in der zweiten Druckkammer nach Maßgabe des Arbeitsfluiddrucks des Lastkraftgeräts veränderbar ist.

Dies kann durch entsprechende und an sich bekannte Druckbeeinflussungsmittel geschehen, welche nach Maßgabe des Arbeitsfluiddrucks des Kraftgeräts betrieben werden und auf den Druck des erste oder/und zweiten Druckspeichers einwirken.

Besonders einfach kann der Fluiddruck in der ersten oder/und der zweiten Druckkammer durch den Arbeitsfluiddruck des Lastkraftgeräts geändert werden, wenn der Arbeitsfluiddruck des Lastkraftgeräts an die erste oder/und die zweite Druckkammer angelegt oder anlegbar ist. Da der Druck in der ersten oder/und in der zweiten Druckkammer unter Umständen in einem bestimmten, gegebenenfalls nicht-linearen, Verhältnis zum Arbeitsfluiddruck des Lastkraftgeräts verändert werden soll, kann eine Druckveränderungsvorrichtung zwischengeschaltet sein, welche den Arbeitsfluiddruck des Lastkraftgeräts auf den in der ersten oder/und in der zweiten Druckkammer jeweils gewünschten Druck verändert.

Da gewünscht sein kann, dass sich der Fluiddruck in der ersten Druckkammer der Kolben-Zylinder-Anordnung verringert, wenn sich der Arbeitsfluiddruck des Lastkraftgeräts erhöht, kann vorgesehen sein, dass der Arbeitsfluiddruck des Lastkraftgeräts eine Vorrichtung betätigt, welche den Druck in der ersten Druckkammer gemäß einem vorgegebenen, gegebenenfalls auch nicht-linearen, Verhältnis zum Arbeitsfluiddruck verringert.

Die oben genannten Ausführungsbeispiele sind besonders vorteilhaft für den häufigeren Fall einer beweglichen und verstellbaren lastaufnahmemittelferneren Radachse anwendbar. Mit zunehmender Last wirkt ein Kippmoment um die lastaufnahmemittelnähere Radachse auf das Flurförderzeug, welches die lastaufnahmemittelfernere Radachse dann, wenn sich die lastaufnahmemittelnähere Radachse zwischen der Last und der lastaufnahmemittelferneren Radachse befindet, entlastet. Da häufig das mit dem Lastaufnahmemittel in Kraftübertragungsverbindung stehende Kraftgerät eine Kraft ausgibt, welche sich gleichsinnig mit der aufgenommenen Last ändert, also mit zunehmender Last ansteigt und mit abnehmender Last sinkt, ändert sich für bewegliche lastaufnahmemittelfernere Radachsen die von dem Lastkraftgerät ausgegebene Kraft gegensinnig zu der auf die bewegliche lastaufnahmemittelfernere Radachse einwirkende Belastungskraft, d.h. die vom Lastkraftgerät ausgegebene Kraft steigt, wenn die Belastungskraft sinkt und umgekehrt. Die vom Lastkraftgerät ausgegebene Kraft ändert sich jedoch in vorteilhafter Weise gleichsinnig mit dem zur Kompensation der Belastungskraftänderung gewünschten Soll-Druck in der oben beschriebenen zweiten Druckkammer.

Dabei soll ausdrücklich nicht ausgeschlossen sein, dass auch die lastaufnahmemittelnähere Radachse des Flurförderzeugs beweglich und verstellbar ausgebildet ist, wenngleich dies aus Gründen der Fahrdynamik von Flurförderzeugen nicht bevorzugt ist.

Wie an sich bekannt ist, kann das Flurförderzeug einen relativ zum Fahrzeugrahmen neigbaren Mast aufweisen, an welchem das Lastaufnahmemittel aufgenommen ist. Vorzugsweise kann dann ein den Mast zur Neigebewegung antreibendes Neigebewegungs-Kraftgerät als das steuerbare Lastkraftgerät verwendet werden, da die von einem derartigen Neigebewegungs-Kraftgerät ausgegebene Kraft proportional zu dem auf das Flurförderzeug einwirkenden Drehmoment um die lastaufnahmemittelnähere Radachse ist. Damit lässt sich, wie oben geschildert, besonders einfach eine unerwünschte Relativbewegung zwischen der beweglichen lastaufnahmemittelferneren Radachse und dem Fahrzeugrahmen eines Flurförderzeugs unterdrücken.

Alternativ oder zusätzlich kann jedoch auch daran gedacht sein, ein das Lastaufnahmemittel zur Hubbewegung antreibendes Hubbewegungs-Kraftgerät als das steuerbare Lastkraftgerät zu verwenden, nach dessen Maßgabe die Zusatzkraft veränderbar ist.

Zwar ist die von dem Hubbewegungs-Kraftgerät ausgegebene Kraft in der Regel nur dem Gewicht der aufgenommenen Last proportional, nicht jedoch dem auf das Flurförderzeug einwirkenden Kippmoment um die lastaufnahmemittelnähere Radachse, jedoch kann auch diese Kraft zur Unterdrückung einer unerwünschten Relativbewegung zwischen der beweglichen lastaufnahmemittelferneren Radachse und dem Fahrzeugrahmen verwendet werden. Auf Grund des verglichen mit dem Neigebewegungs-Kraftgerät weniger unmittelbaren Zusammenhangs zwischen der ausgegebenen Kraft des Lastkraftgeräts und der auf die lastaufnahmemittelferneren Radachse des Flurförderzeugs einwirkenden Belastungskraft kann bei der Verwendung des Hubbewegungs-Kraftgeräts als das steuerbare Lastkraftgerät, nach dessen Maßgabe die auf die bewegliche Radachse einwirkende Zusatzkraft veränderbar ist, die oben genannte Druckveränderungsvorrichtung vorgesehen sein.

Die vorliegende Erfindung wird im Folgenden anhand der beiliegenden Figuren näher erläutert. Es stellt dar:
- Fig. 1: eine erste Ausführungsform der vorliegenden Erfindung und
- Fig. 2: eine zweite Ausführungsform der vorliegenden Erfindung.

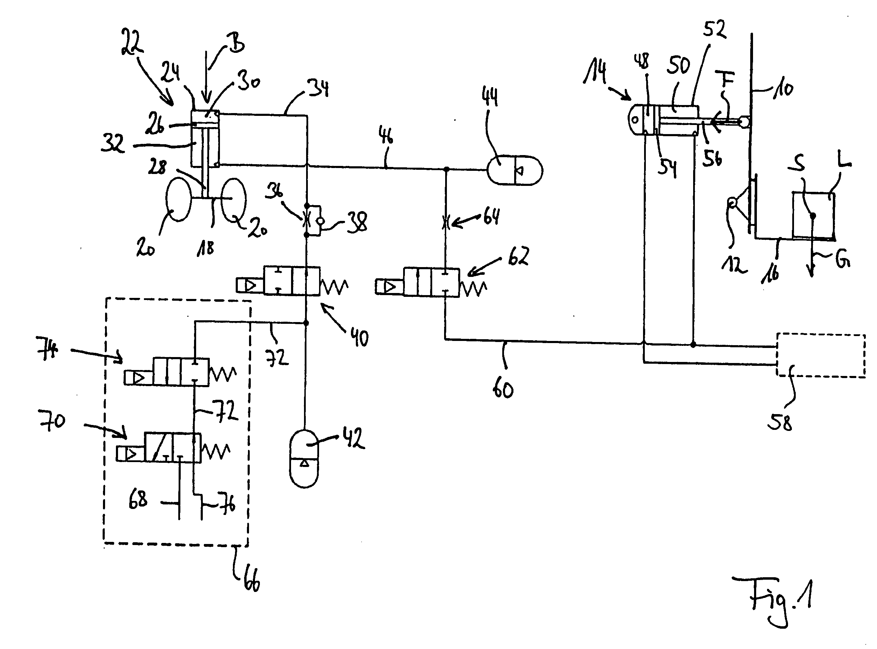

In Fig. 1 ist schematisch eine Niveauregulierungsvorrichtung eines Flurförderzeugs dargestellt. Zu erkennen ist ein Mast 10, welcher um eine Neigeachse 12 durch eine doppeltwirkende Hydraulik-Kolben-Zylinder-Anordnung 14 neigbar ist.

An dem Mast 10 ist eine Gabel 16 durch eine in Fig. 1 nicht dargestellte Hydraulik-Kolben-Zylinder-Anordnung längs des Mastes 10 hebbar und senkbar.

In Fig. 1 ist weiterhin eine Radachse 18 gezeigt, welche bevorzugt eine lastaufnahmemittelfernere Radachse ist, jedoch auch eine lastaufnahmemittelnähere Radachse des Flurförderzeugs sein kann.

Die Radachse 18 trägt im gezeigten Beispiel zwei Räder 20, kann jedoch auch nur ein Rad oder mehr als zwei Räder tragen.

Die Radachse 18 ist aufgenommen von einer Hydraulik-Kolben-Zylinder-Anordnung 22, deren Zylinder 24 am Fahrzeugrahmen festgelegt ist, und deren System aus Kolben 26 und starr mit diesem verbundener Kolbenstange 28 mit der Radachse 18 verbunden ist. Die Kolbenstange 28 ist im Wesentlichen orthogonal zur Aufstandsfläche orientiert. Somit ist die Radachse 18 relativ zum Fahrzeugrahmen im Wesentlichen orthogonal zur nicht gezeigten Aufstandsfläche des Flurförderzeugs beweglich. Die Hydraulik-Kolben-Zylinder-Anordnung 22 kann in beliebiger Orientierung am Fahrzeugrahmen aufgenommen sein, solange durch eine entsprechende Gestaltung der Radachsenaufnahme oder Zwischenanordnung einer Kraftumlenkung gewährleistet ist, dass eine Betätigung der Anordnung 22 zu einer Bewegung der Radachse 18 mit zur Aufstandsfläche orthogonaler Bewegungskomponente führen kann.

Die Hydraulik-Kolben-Zylinder-Anordnung 22 ist eine doppeltwirkende Hydraulik-Zylinder-Anordnung mit einer ersten Druckkammer 30 und einer durch den Kolben 26 von dieser getrennten zweiten Druckkammer 32.

Die erste Druckkammer 30 ist über eine Hydraulikleitung 34, in welcher eine Drossel 36 und ein zu dieser paralleles Rückschlagventil 38 sowie ein schaltbares Ventil 40 vorgesehen sind, mit einem ersten Druckspeicher 42 verbunden. Die Drossel 36 kann eine veränderlich einstellbare Drossel sein, mit welcher verschiedene Dämpfungscharakteristiken erhalten werden können. Die Drossel 36 kann auch als in Abhängigkeit von Fahrzeugbetriebszuständen aktiv regelbare Drossel ausgebildet sein, so dass abhängig vom Betriebszustand des Fahrzeugs (etwa Fahrzeuggeschwindigkeit oder/und aufgenommene Last) eine gewünschte Dämpfungscharakteristik automatisch eingestellt wird.

Alternativ oder zusätzlich kann die Drosselöffnung abhängig von der Stellung oder/und der Geschwindigkeit und Bewegungsrichtung des Kolbens 26 relativ zum Zylinder 24 geregelt werden. So ist es für eine komfortable Schwingungsisolation vorteilhaft, wenn die Öffnung der Drossel 36 bei zunehmender Annäherung des Kolbens 26 an eine seiner Endstellungen verkleinert wird. In einem mittleren Stellungsbereich des Kolbens 26 im Zylinder 24 kann die Drossel 36 vollständig geöffnet sein.

Das schaltbare Ventil 40 ist in Durchlassstellung vorgespannt, in welcher der erste Druckspeicher 42 mit der ersten Druckkammer 30 in Fluidverbindung steht, und durch eine Steuervorrichtung in eine Sperrstellung bringbar, in welcher der erste Druckspeicher 42 von der ersten Druckkammer 30 getrennt ist. Dadurch kann die durch den Druckspeicher 42 und die erste Druckkammer 30 bereitgestellte hydraulische Federung der Radachse 18 gesperrt werden, so dass die Hinterachse 18 bezüglich des Zylinders 24 und somit des Fahrzeugrahmens im Wesentlichen starr festgelegt ist.

Nachzutragen ist, dass das Rückschlagventil 38 in Richtung vom ersten Druckspeicher 42 zur ersten Druckkammer 30 hin durchlässt und in der entgegengesetzten Richtung sperrt.

Die zweite Druckkammer 32 der Hydraulik-Kolben-Zylinder-Anordnung 22 ist mit einem zweiten Druckspeicher 44 über eine Hydraulikleitung 46 verbunden.

Wenn auf der Gabel 16 eine Last L aufgenommen ist, so wirkt in Schwerkraftwirkungsrichtung durch den Schwerpunkt S der Last L gehend die Gewichtskraft G der Last L. Diese bewirkt ein Drehmoment um die Neigeachse 12 des Masts 10. Diesem Drehmoment wird durch eine von der Hydraulik-Kolben-Zylinder-Anordnung 14 ausgegebene Kraft F entgegengewirkt, die ebenfalls ein Drehmoment um die Neigeachse 12 bewirkt. Im Gleichgewichtszustand sind die um die Neigeachse 12 wirkenden Drehmomente gleich groß, wobei sich die Kräfte G und F umgekehrt proportional zu ihren zugeordneten Lastarmen verhalten.

Die Hydraulik-Kolben-Zylinder-Anordnung 14 ist doppeltwirkend und umfasst einen ersten Arbeitsraum 48 und einen zweiten Arbeitsraum 50. Die Arbeitsräume 48 und 50 in dem Zylinder 52 sind durch den Kolben 54 getrennt, der durch die Kolbenstange 56 mit dem Mast 10 verbunden ist.

Eine Neigesteuerung 58 ist nun derart ausgebildet, dass sie gezielt Hydraulikflüssigkeit in den ersten Arbeitsraum 48 und in den zweiten Arbeitsraum 50 fördern kann, wobei es bei der dargestellten Anordnung für ein Gleichgewicht der Drehmomente um die Neigeachse 12 ausreicht, im zweiten Arbeitsraum 50 für einen gewünschten Fluiddruck zu sorgen, während der erste Arbeitsraum 48 im Wesentlichen drucklos bleiben kann. Daher besteht ein unmittelbarer Zusammenhang zwischen dem von der Gewichtskraft G der Last L verursachten Drehmoment um die Neigeachse 12 und dem im zweiten Arbeitsraum 50 herrschenden Druck der Hydraulikflüssigkeit.

Deshalb ist der im zweiten Arbeitsraum 50 herrschende Hydraulikflüssigkeitsdruck durch die Leitung 60 über ein schaltbares Ventil 62 und eine Drossel 64 an die Leitung 46 und somit an die zweite Druckkammer 32 anlegbar. Die Drossel sorgt während einer Strömungsbewegung der Hydraulikflüssigkeit für eine Druckminderung.

Das schaltbare Ventil 62 ist in eine Sperrstellung vorgespannt und kann durch eine Steuervorrichtung in eine Durchlassstellung verstellt werden. In dieser Durchlassstellung des Ventils 62 wirkt der Druck des zweiten Arbeitsraums 50 auf die zweite Druckkammer 32 der Hydraulik-Kolben-Zylinder-Anordnung 22, durch welche die Radachse 18 mit dem Fahrzeugrahmen verbunden ist.

In dem in Fig. 1 gezeigten Beispiel ist die Radachse 18 eine lastaufnahmemittelfernere Radachse. Dann, wenn die Last L mit der Gabel 16 aufgenommen wird, wird auf Grund des durch die Last L und ihre Gewichtskraft G hervorgerufenen Kippmoments um die Vorderachse des Flurförderzeugs die auf Grund des Eigengewichts des Flurförderzeugs und der Gewichtskraft G der aufgenommenen Last auf die Hinterachse 18 einwirkende Belastungskraft reduziert. Da der erste Druckspeicher 42 bei vorgegebener Stellung des Kolbens 26 einen im Wesentlichen konstanten Hydraulikflüssigkeitsdruck bereitstellt, würde die Verringerung der Belastungskraft B ohne weitere Maßnahmen zu einem Ausschieben des Kolbens 26 und der Kolbenstange 28 aus dem Zylinder 24 führen.

Da sich jedoch bei dem in Fig. 1 gezeigten Ausführungsbeispiel mit Aufnahme der Last L auf der Gabel 16 auch der Druck in dem zweiten Arbeitsraum 50 der Hydraulik-Kolben-Zylinder-Anordnung 14 erhöht und der zweite Arbeitsraum 50 mit der zweiten Druckkammer 32 über die Leitungen 46 und 60 kommuniziert, steigt gleichzeitig mit der Verringerung der Belastungskraft B der Druck in der zweiten Druckkammer 32 an, so dass die Verringerung der Belastungskraft B durch den auf den Kolben 26 in der zweiten Druckkammer 32 wirkenden erhöhten Hydraulikdruck und die daraus resultierende Zusatzkraft kompensiert wird. Obwohl die Hinterachse 18 somit hydraulisch gefedert ist, führt die Aufnahme einer Last L somit nicht zu einer unerwünschten Lageveränderung des Fahrzeugrahmens relativ zur Aufstandsfläche, so dass unter Beibehaltung der Federung der Hinterachse 18 das Niveau des Fahrzeugrahmens relativ zur Aufstandsfläche des Flurförderzeugs im Wesentlichen konstant gehalten werden kann.

In Fig. 1 ist außerdem eine Zusatzeinrichtung 66 gezeigt, mit welcher gezielt Hydraulikfluid in die erste Druckkammer 30 gefördert werden kann. Hierzu ist eine Förderleitung 68 vorgesehen, welche mit einer nicht dargestellten Fluidförderpumpe in Verbindung steht. Diese Fluidförderpumpe kann die gleiche sein, welche auch Hydraulikflüssigkeit zu der Hydraulik-Kolben-Zylinder-Anordnung 14 fördert.

Über ein erstes Steuerventil 70 kann die Förderleitung 68 mit dem Leitungsstrang 72 gegen eine Federvorspannung des Steuerventils 70 verbunden werden.

Weiterhin ist ein zweites Steuerventil 74 vorgesehen, mit welchem der Leitungsstrang 72 gesperrt oder fluidleitend gemacht werden kann. Das zweite Steuerventil 74 ist eine den Leitungsstrang 72 unterbrechende Sperrstellung vorgespannt und kann gegen die Federvorspannkraft in die Durchlassstellung verstellt werden.

Dann, wenn sich das zweite Steuerventil 74 in der Durchlassstellung befindet und das erste Steuerventil 70 die Förderleitung 68 mit dem Leitungsstrang 72 verbindet, kann Hydraulikflüssigkeit über die Förderleitung 68, den Leitungsstrang 72, das schaltbare Ventil 40, die Drossel 36 und das Rückschlagventil 38 und die Leitung 34 in die erste Druckkammer 30 der Hydraulik-Kolben-Zylinder-Anordnung 22 gefördert werden, um die Kolbenstange 28 aus dem Zylinder 24 auszuschieben.

Die Zusatzeinrichtung 66 umfasst weiterhin eine Ablassleitung 76, welche zu einem Hydraulikflüssigkeitsreservoir (nicht dargestellt) führt.

Wenn sich das erste Steuerventil 70 in der Ablassstellung befindet, in welche es vorgespannt ist und in welcher es die Ablassleitung 76 mit dem Leitungsstrang 72 verbindet, kann dann, wenn das zweite Steuerventil 74 in seine Durchlassstellung verstellt wird, Hydraulikflüssigkeit über die Leitung 34, die Drossel 36, das Sperrventil 40, den Leitungsstrang 72 und die Ablassleitung 76 Hydraulikflüssigkeit aus der ersten Druckkammer 30 in das Hydraulikflüssigkeitsreservoir abgelassen werden. Dadurch wird die Kolbenstange 78 in den Zylinder 24 hinein verstellt.

Die Zusatzeinrichtung 66 kann daher einer gezielten Niveaueinstellung des Fahrzeugrahmens relativ zur Radachse 18 oder zu mehreren Radachsen dienen.

Darüber hinaus kann mit der Zusatzeinrichtung 66 Hydraulikflüssigkeit im Druckspeicher 42 ergänzt werden, wenn diese durch eine Leckage aus dem Leitungssystem oder aus dem Druckspeicher 42 ausgetreten sein sollte.

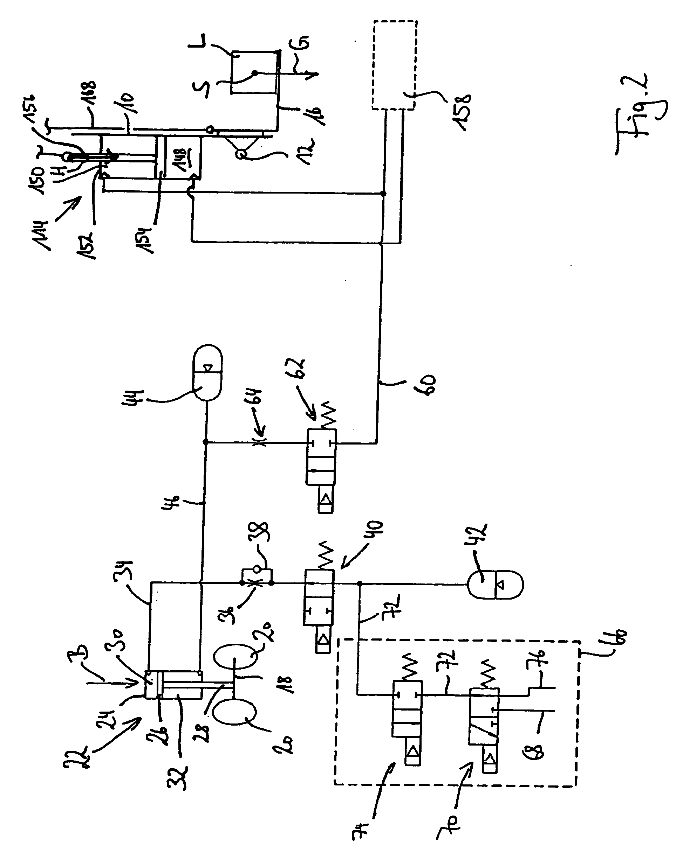

Die in Fig. 2 gezeigte zweite Ausführungsform stimmt im Wesentlichen mit der in Fig. 1 gezeigten überein. Lediglich ist anstelle einer eine Neigungsverstellung des Masts 10 bewirkenden Hydraulik-Kolben-Zylinder-Anordnung eine die Gabel 16 längs des Mastes 10 hebende und senkende Hydraulik-Kolben-Zylinder-Anordnung 114 dargestellt, von welcher ebenfalls ein Arbeitsraum mit der zweiten Druckkammer 32 druckübertragungsmäßig verbindbar ist.

In Fig. 2 ist die zum Heben und Senken der Gabel 16 relativ zum Mast 10 vorgesehene Hydraulik-Kolben-Zylinder-Anordnung 114 mit den gleichen Bezugszeichen versehen wie die zum Neigen des Mastes 10 vorgesehene und in Fig. 1 dargestellte Hydraulik-Kolben-Zylinder-Anordnung 14, jedoch erhöht um die Zahl 100.

Die Kolbenstange 156 ist über einen Kettenzug 168 mit der Gabel 16 verbunden, so dass sich die Gabel 16 hebt, wenn sich der Kolben 154 im Zylinder 152 senkt und umgekehrt. Das Gewicht der Gabel 16 sowie die Gewichtskraft G der Last L wird durch den Druck in dem zweiten Arbeitsraum 150 im Gleichgewicht gehalten. Aus diesem Grunde ist der Druck dieses zweiten Arbeitsraums 150 mit der zweiten Druckkammer 32 verbunden bzw. verbindbar.

Durch den Seilzug 168 wirkt auf die Kolbenstange 156 eine Hubkraft H, welche der Summe aus der Gewichtskraft G der Last L und dem Eigengewicht der Gabel 16, nicht jedoch dem Kippmoment um die Neigeachse 12 proportional ist. Da sich jedoch das Verhältnis der Lastarme der gabelseitig und kolben-zylinder-anordnungsseitig wirkenden Kräfte auf Grund der vorgegebenen Geometrien und der möglichen Lastabmessungen innerhalb enger Grenzen bewegt, kann die auf die Kolbenstange wirkende Kraft H als quasiproportional zum Kippmoment um die Neigeachse 12 oder um die Vorderachse des Flurförderzeugs angesehen werden. Durch geeignete Wahl der Drossel 64 kann der im zweiten Arbeitsraum herrschende Hydraulikflüssigkeitsdruck betragsmäßig auf einen vorteilhaften Wert für die zweite Druckkammer 32 eingestellt werden, so dass sich bei Aufnahme oder Abgabe einer Last L auf die bzw. von der Gabel 16 die Relativstellung des Kolbens 26 bezüglich des Zylinders 24 nicht oder nur in sehr geringem Umfang ändert.

## Patentansprüche

1. Flurförderzeug, insbesondere Gabelstapler, mit einem Fahrzeugrahmen und einem relativ zum Fahrzeugrahmen verlagerbaren Lastaufnahmemittel (16), wobei an dem Fahrzeugrahmen wenigstens ein lastaufnahmemittelnäheres Rad und mit Abstand von diesem wenigstens ein lastaufnahmemittelferneres Rad (20) vorgesehen ist, wobei die Radachse (18) wenigstens eines Rades (20) relativ zum Fahrzeugrahmen beweglich ist, und ferner auf die wenigstens eine bewegliche Radachse (18) eine vom Eigengewicht des Flurförderzeugs und einer gegebenenfalls von diesem aufgenommenen Last (L) verursachte Belastungskraft (B) einwirkt, welche sich betriebsmäßig ändert, wobei zur Verlagerung des Lastaufnahmemittels (16) relativ zum Fahrzeugrahmen wenigstens ein wahlweise steuerbares Lastkraftgerät (14; 114) in Kraftübertragungsverbindung mit dem Lastaufnahmemittel (16) vorgesehen ist, wobei weiter die wenigstens eine bewegliche Radachse (18) zusätzlich mit einer Zusatzkraft beaufschlagt oder beaufschlagbar ist, wobei das Flurförderzeug ferner eine mit der wenigstens einen beweglichen Radachse (18) verbundene, fluidbetriebene Verstelleinrichtung (22, 66) aufweist, durch welche die bewegliche Radachse (18) relativ zum Fahrzeugrahmen längs einer Verstelltrajektorie mit einer zur Aufstandsfläche des Flurförderzeugs orthogonalen Verstellkomponente verstellbar ist, wobei die Zusatzkraft die zur Verstellung der beweglichen und verstellbaren Radachse (18) benötigte Stellkraft ist, wobei die Verstelleiririchtung (22, 66) eine Kolben-Zylinder-Anordnung (22) umfasst, wobei ein Bauteil aus Kolben (26) und Zylinder (24) mit dem Fahrzeugrahmen und das jeweils andere Bauteil mit der beweglichen und verstellbaren Radachse (18) verbunden ist, mit einer ersten Druckkammer (30), welche durch den Zylinder (24) und eine erste Kolbenfläche des Kolbens (26) gebildet ist und mit einem ersten Druckspeicher (42) in Fluidüberträgungsverbindung steht oder bringbar ist,
**dadurch gekennzeichnet,**
**dass** die Zusatzkraft nach Maßgabe der von dem, Lastkraftgerät (14; 114) ausgegebenen Kraft (F; H) veränderbar ist und hierzu Druck in der ersten Druckkammer (30) nach Maßgabe der vom Lastkraftgerät (14; 114) ausgegebenen Kraft (F; H) veränderbar ist.

2. Flurförderzeug nach Anspruch 1,
**dadurch gekennzeichnet, dass** die Verstelleinrichtung (22, 66) mit einem steuerbaren Verstellkraftgerät zusammenwirkt, durch welche die Zusatzkraft wahlweise einstellbar ist.

3. Flurförderzeug nach Anspruch 1 oder 2,
**dadurch gekennzeichnet, dass** die Verstelleinrichtung (22, 66) eine Federanordnung (22) umfasst, mit weicher die verstellbare Radachse (18) als gefederte Radachse (18) mit dem Fahrzeugrahmen verbunden ist.

4. Flurförderzeug nach einem der vorhergehenden Ansprüche,
**dadurch gekennzeichnet, dass** die Kolben-Zylinder-Anordnung (22) eine doppeltwirkende Kolben-Zylinder-Anordnung (22) ist, mit einer zweiten Druckkammer (32), welche durch den Zylinder (24) und eine der ersten entgegengesetzte zweite Kolbenfläche des Kolbens (26) gebildet ist und mit einem vom ersten Druckspeicher (42) gesondert ausgebildeten zweiten Druckspeicher (44) in Fluidübertragungsverbindung steht oder bringbar ist.

5. Flurförderzeug nach einem der vorhergehenden Ansprüche
**dadurch gekennzeichnet, dass** zur Veränderung der Zusatzkraft nach Maßgabe der von dem Lastkraftgerät (14; 114) ausgegebenen Kraft (F; H) der Druck in der ersten Druckkammer (30) oder/und der Druck in der zweiten Druckkammer (32) nach Maßgabe der vom Lastkraftgerät (14; 114) ausgegebenen Kraft (F; H) veränderbar ist.

6. Flurförderzeug nach Anspruch 2, insbesondere in Kombination mit einem der Ansprüche 3 bis 5,
**dadurch gekennzeichnet, dass** zur Veränderung der Zusatzkraft durch das Verstellkraftgerät der Druck in der ersten Druckkammer (30) oder/und der Druck in der zweiten Druckkammer (32) durch das Verstellkraftgerät veränderbar ist.

7. Flurförderzeug nach einem der vorhergehenden Ansprüche,
**dadurch gekennzeichnet, dass** es eine Steuervorrichtung (50, 60, 46; 150, 60, 46) aufweist, welche dazu ausgebildet ist, zumindest dann, wenn sich die Belastungskraft (B) betragsmäßig in einem vorbestimmten Kraftbereich befindet, die Zusatzkraft derart zu verändern, dass ihre in Richtung der Verstelltrajektorie wirkende Komponente betragsmäßig größer wird, wenn die Belastungskraft (B) kleiner wird und umgekehrt.

8. Flurförderzeug nach einem der vorhergehenden Ansprüche,
**dadurch gekennzeichnet, dass** das Lastkraftgerät (14; 114) ein fluidbetätigte Lastkraftgerät (14; 114) ist, vorzugsweise Hydraulik-Kolben-Zylinder-Anordnung (14; 114) ist, wobei die Zusatzkraft nach Maßgabe des Arbeitsfluiddrucks des Lastkraftgeräts (14; 114) veränderbar ist.

9. Flurförderzeug nach Anspruch 5 und 8, gegebenenfalls unter Einbeziehung eines der Ansprüche 6 oder 7,
**dadurch gekennzeichnet, dass** der Druck des ersten Druckspeichers (42) oder/und der Druck des zweiten Druckspeichers (44) nach Maßgabe des Arbeitsfluiddrucks des Lastkraftgeräts (14; 114) veränderbar ist.

10. Flurförderzeug nach Anspruch 5 in Verbindung mit Anspruch 8 oder 9,
**dadurch gekennzeichnet, dass** der Arbeitsfluiddruck des Lastkraftgeräts (14; 114), vorzugsweise unter Zwischenschaltung einer Druckveränderungsvorrichtung (64), an die erste (30) oder/und an die zweite Druckkammer (32) angelegt oder anlegbar ist.

11. Flurförderzeug nach Anspruch 9 oder 10,
**dadurch gekennzeichnet, dass** der Arbeitsfluiddruck des Lastkraftgeräts (14; 114), vorzugsweise unter Zwischenschaltung einer Druckveränderungsvorrichtung (64), an den ersten (42) oder/und den zweiten Druckspeicher (44) angelegt oder anlegbar ist.

12. Flurförderzeug nach einem der vorhergehenden Ansprüche,
**dadurch gekennzeichnet, dass** es einen relativ zum Fahrzeugrahmen neigbaren Mast (10) aufweist, an welchem das Lastaufnahmemittel (16) aufgenommen ist, und ferner ein den Mast (10) zur Neigebewegung antreibendes Neigebewegungs-Kraftgerät (14) als das steuerbare Lastkraftgerät (14) aufweist.

13. Flurförderzeug nach einem der vorhergehenden Ansprüche,
**dadurch gekennzeichnet, dass** das Lastaufnahmemittel (16) relativ zum Fahrzeugrahmen heb- und senkbar ist und das Flurförderzeug ein das Lastaufnahmemittel (16) zur Hubbewegung antreibendes Hubbewegungs-Kraftgerät (114) als das steuerbare Lastkraftgerät (114) aufweist.

14. Flurförderzeug nach einem der vorhergehenden Ansprüche, unter Rückbeziehung auf den Anspruch 2,
**dadurch gekennzeichnet, dass** das steuerbare Verstellkraftgerät eine Fluidförderpumpe umfasst.

15. Flurförderzeug nach Anspruch 14,
**dadurch gekennzeichnet, dass** die Verstelleinrichtung (22, 66) und das steuerbare Lastkraftgerät (14; 114) mit einer gemeinsamen Fluidförderpumpe in Arbeitsfluidübertragungsverbindung stehen.

16. Flurförderzeug nach einem der vorhergehenden Ansprüche,
**dadurch gekennzeichnet, dass** die wenigstens eine bewegliche Radachse (18) in ihrer Lage relativ zum Fahrzeugrahmen festlegbar ist.

## Claims

1. Industrial truck, in particular a fork-lift truck, having a vehicle frame and a load pickup means (16), which can be displaced in relation to the vehicle frame, at least one wheel which is closer to the load pickup means and, at a distance from this, at least one wheel (20) which is further away from the load pickup means being provided on the vehicle frame, the wheel axle (18) of at least one wheel (20) being capable of moving in relation to the vehicle frame, and in addition a loading force (B), which is caused by the tare weight of the industrial truck and a load (L) which may have been picked up by said industrial truck, acting on the at least one moveable wheel axle (18), which loading force (B) changes operationally, at least one selectively controllable load force device (14; 114) which is connected in terms of force transfer to the load pickup means (16) being provided so as to displace the load pickup means (16) in relation to the vehicle frame, furthermore the at least one moveable wheel axle (18) in addition having or being capable of having an additional force applied to it, the industrial truck furthermore having a fluidically operated adjusting device (22, 66), which is connected to the at least one moveable wheel axle (18) and by means of which the moveable wheel axle (18) can be adjusted in relation to the vehicle frame along an adjustment trajectory with an adjustment component which is orthogonal with respect to the standing area of the industrial truck, the additional force being the actuating force required for adjusting the moveable and adjustable wheel axle (18), the adjusting device (22, 66) comprising a piston/cylinder arrangement (22), one component part comprising the piston (26) and the cylinder (24) being connected to the vehicle frame, and the respective other component part being connected to the moveable and adjustable wheel axle (18), having a first pressure chamber (30), which is formed by the cylinder (24) and a first piston face of the piston (26) and is or can be connected in terms of fluid transfer to a first pressure accumulator (42),
**characterized**
**in that** the additional force can be changed according to the force (F; H) output by the load force device (14; 114) and, for this purpose, pressure in the first pressure chamber (30) can be changed according to the force (F; H) output by the load force device (14; 114).

2. Industrial truck according to Claim 1,
**characterized in that** the adjusting device (22, 66) interacts with a controllable adjustment force device, by means of which the additional force can be set selectively.

3. Industrial truck according to Claim 1 or 2,
**characterized in that** the adjusting device (22, 66) comprises a spring arrangement (22), with which the adjustable wheel axle (18), in the form of a springloaded wheel axle (18), is connected to the vehicle frame.

4. Industrial truck according to one of the preceding claims,
**characterized in that** the piston/cylinder arrangement (22) is a double-action piston/cylinder arrangement (22), having a second pressure chamber (32), which is formed by the cylinder (24) and a second piston face, which is opposite the first piston face, of the piston (26) and is or can be connected in terms of fluid transfer to a second pressure accumulator (44), which is formed separately from the first pressure accumulator (42).

5. Industrial truck according to one of the preceding claims,
**characterized in that**, in order to change the additional force according to the force (F; H) output by the load force device (14; 114), the pressure in the first pressure chamber (30) and/or the pressure in the second pressure chamber (32) can be changed according to the force (F; H) output by the load force device (14; 114).

6. Industrial truck according to Claim 2, in particular in combination with one of Claims 3 to 5,
**characterized in that**, in order to change the additional force by means of the adjustment force device, the pressure in the first pressure chamber (30) and/or the pressure in the second pressure chamber (32) can be changed by means of the adjustment force device.

7. Industrial truck according to one of the preceding claims,
**characterized in that** it has a control apparatus (50, 60, 46; 150, 60, 46), which is designed to change the additional force at least when the value of the loading force (B) is in a predetermined force range in such a way that its component acting in the direction of the adjustment trajectory becomes higher in value if the loading force (B) becomes lower, and vice versa.

8. Industrial truck according to one of the preceding claims,
**characterized in that** the load force device (14; 114) is a fluidically actuated load force device (14; 114), preferably a hydraulic piston/cylinder arrangement (14; 114), it being possible to change the additional force according to the working fluid pressure of the load force device (14; 114).

9. Industrial truck according to Claims 5 and 8, possibly incorporating either of Claims 6 and 7,
**characterized in that** the pressure of the first pressure accumulator (42) and/or the pressure of the second pressure accumulator (44) can be changed according to the working fluid pressure of the load force device (14; 114).

10. Industrial truck according to Claim 5 in conjunction with Claim 8 or 9,
**characterized in that** the working fluid pressure of the load force device (14; 114), preferably with a pressure-changing apparatus (64) interposed, is or can be applied to the first (30) and/or to the second pressure chamber (32).

11. Industrial truck according to Claim 9 or 10,
**characterized in that** the working fluid pressure of the load force device (14; 114), preferably with a pressure-changing apparatus (64) interposed, is or can be applied to the first (42) and/or to the second pressure accumulator (44).

12. Industrial truck according to one of the preceding claims,
**characterized in that** it has a mast (10), which can be inclined in relation to the vehicle frame and on which the load pickup means (16) is accommodated, and in addition has an inclined movement force device (14), which drives the mast (10) so as to carry out an inclined movement, as the controllable load force device (14).

13. Industrial truck according to one of the preceding claims,
**characterized in that** the load pickup means (16) can be raised and lowered in relation to the vehicle frame, and the industrial truck has a linear movement force device (114), which drives the load pickup means (16) so as to carry out a linear movement, as the controllable load force device (114).

14. Industrial truck according to one of the preceding claims while referring back to Claim 2,
**characterized in that** the controllable adjustment force device comprises a fluid delivery pump.

15. Industrial truck according to Claim 14,
**characterized in that** the adjusting device (22, 66) and the controllable load force device (14; 114) are connected in terms of working fluid transfer to a common fluid delivery pump.

16. Industrial truck according to one of the preceding claims,
**characterized in that** the at least one moveable wheel axle (18) can be fixed in its position in relation to the vehicle frame.

## Revendications

1. Chariot de manutention, en particulier chariot élévateur à fourche, comportant un châssis et un moyen de réception des charges (16), propre à être déplacé par rapport au châssis, sachant que sur le châssis est prévue au moins une roue proche du moyen de réception des charges et, à distance de celle-ci, au moins une roue (20) plus éloignée du moyen de réception des charges, l'essieu (18) d'au moins une roue (20) étant mobile par rapport au châssis, et, en outre, une force de charge (B), laquelle est générée par le poids propre du chariot de manutention et par une charge (L) éventuellement posée sur celui-ci et laquelle varie en cours de service, s'exerce sur ledit au moins un essieu (18) mobile, sachant que pour le déplacement du moyen de réception des charges (16) par rapport au châssis, il est prévu au moins un dispositif d'application de force (14 ; 114) pouvant être commandé au choix et relié avec le moyen de réception des charges (16) pour la transmission des forces, sachant que, en outre, ledit au moins un essieu (18) mobile est sollicité ou peut être sollicité en plus par une force additionnelle, le chariot de manutention comportant, en outre, un dispositif de réglage (22, 66), qui est actionné par un fluide et est relié audit au moins un essieu (18) mobile et par lequel l'essieu (18) mobile peut être déplacé par rapport au châssis le long d'une trajectoire de réglage avec une composante de réglage orthogonale par rapport à la surface de pose du chariot de manutention, la force additionnelle étant la force de réglage nécessaire pour le déplacement de l'essieu (18) mobile et réglable, le dispositif de réglage (22, 66) comportant un système à piston et cylindre (22), sachant qu'un module formé par le piston (26) et le cylindre (24) est assemblé au châssis et l'autre module respectif est relié à l'essieu (18) mobile et réglable, lequel système comporte une chambre de pression (30), qui est formée par le cylindre (24) et une première face du piston (26) et qui, pour la transmission d'un fluide, est en liaison ou peut être amenée en liaison avec un premier réservoir de pression (42),
**caractérisé en ce que** la force additionnelle peut être variée en fonction de la force (F ; H) appliquée par le dispositif d'application de force (14; 114), et, à cet effet, la pression dans la chambre de pression (30) peut être variée en fonction de la force (F ; H) appliquée par le dispositif d'application de force (14 ; 114).

2. Chariot de manutention selon la revendication 1, **caractérisé en ce que** le dispositif de réglage (22, 66) coopère avec un dispositif d'application de la force de réglage, qui peut être commandé et par lequel la force additionnelle peut être réglée au choix.

3. Chariot de manutention selon la revendication 1 ou 2, **caractérisé en ce que** le dispositif de réglage (22, 66) comporte un système de suspension à ressort (22), par lequel l'essieu (18) réglable, formant un essieu (18) suspendu sur ressorts, est assemblé au châssis.

4. Chariot de manutention selon l'une quelconque des revendications précédentes, **caractérisé en ce que** le système à piston et cylindre (22) est un vérin à double effet (22), qui comporte une deuxième chambre de pression (32), qui est formée par le cylindre (24) et une deuxième face du piston (26) opposée à la première face, et qui, pour la transmission d'un fluide, est en liaison ou peut être amenée en liaison avec un deuxième réservoir de pression (44) réalisé séparément du premier réservoir de pression (42).

5. Chariot de manutention selon l'une quelconque des revendications précédentes, **caractérisé en ce que** pour la variation de la force additionnelle en fonction de la force (F ; H) appliquée par le dispositif d'application de force (14; 114), la pression dans la première chambre de pression (30) et/ou la pression dans la deuxième chambre de pression (32) peut être variée en fonction de la force (F ; H) appliquée par le dispositif d'application de force (14 ; 114).

6. Chariot de manutention selon la revendication 2, en particulier en combinaison avec l'une des revendications 3 à 5, **caractérisé en ce que** pour la variation de la force additionnelle par le dispositif d'application de la force de réglage, la pression dans la première chambre de pression (30) et/ou la pression dans la deuxième chambre de pression (32) peut être variée par le dispositif d'application de la force de réglage.

7. Chariot de manutention selon l'une quelconque des revendications précédentes, **caractérisé en ce qu'**il comporte un dispositif de commande (50, 60, 46 ; 150, 60, 46), qui est configuré pour faire varier la force additionnelle, au moins lorsque la valeur de la force de charge (B) se situe dans une plage de force prédéterminée, de telle sorte que la composante de ladite force additionnelle, agissant dans la direction de la trajectoire de réglage, augmente en valeur lorsque la force de charge (B) diminue, et inversement.

8. Chariot de manutention selon l'une quelconque des revendications précédentes, **caractérisé en ce que** le dispositif d'application de force (14 ; 114) est un dispositif d'application de force (14 ; 114) actionné par un fluide, de préférence un vérin hydraulique (14 ; 114), la force additionnelle pouvant être variée en fonction de la pression du fluide de travail du dispositif d'application de force (14 ; 114).

9. Chariot de manutention selon les revendications 5 et 8, le cas échéant en intégrant l'une des revendications 6 ou 7, **caractérisé en ce que** la pression du premier réservoir de pression (42) et/ou la pression du deuxième réservoir de pression (44) peut être variée en fonction de la pression du fluide de travail du dispositif d'application de force (14 ; 114).

10. Chariot de manutention selon la revendication 5, en association avec la revendication 8 ou 9, **caractérisé en ce que** la pression du fluide de travail du dispositif d'application de force (14 ; 114) est appliquée ou peut être appliquée, de préférence par le montage intercalé d'un dispositif de variation de la pression (64), sur la première (30) et/ou sur la deuxième chambre de pression (32).

11. Chariot de manutention selon la revendication 9 ou 10, **caractérisé en ce que** la pression du fluide de travail du dispositif d'application de force (14 ; 114) est appliquée ou peut être appliquée, de préférence par le montage intercalé d'un dispositif de variation de la pression (64), sur le premier (42) et/ou sur le deuxième réservoir de pression (44).

12. Chariot de manutention selon l'une quelconque des revendications précédentes, **caractérisé en ce qu'**il comporte un mât (10) inclinable par rapport au châssis, sur lequel est logé le moyen de réception des charges (16), et, en outre, un dispositif d'application de la force d'inclinaison (14), formant le dispositif d'application de force (14) apte à être commandé, actionnant le mouvement d'inclinaison du mât (10).

13. Chariot de manutention selon l'une quelconque des revendications précédentes, **caractérisé en ce que** le moyen de réception des charges (16) peut être relevé et abaissé par rapport au châssis, et le chariot de manutention comporte un dispositif d'application de la force de levage (114), formant le dispositif d'application de force (114) apte à être commandé, actionnant le mouvement de levage du moyen de réception des charges (16).

14. Chariot de manutention selon l'une quelconque des revendications précédentes avec renvoi à la revendication 2, **caractérisé en ce que** le dispositif d'application de la force de réglage, apte à être commandé, comporte une pompe de circulation du fluide.

15. Chariot de manutention selon la revendication 14, **caractérisé en ce que** le dispositif de réglage (22, 66) et le dispositif d'application de force (14 ; 114), apte à être commandé, communiquent pour la transmission du fluide avec une pompe de circulation du fluide commune.

16. Chariot de manutention selon l'une quelconque des revendications précédentes, **caractérisé en ce que** ledit au moins un essieu (18) mobile peut être immobilisé dans sa position par rapport au châssis.
